Europäisches Patentamt

European Patent Office

Office européen des brevets

(11) Veröffentlichungsnummer: **0 348 761**
**A2**

# (12) EUROPÄISCHE PATENTANMELDUNG

(21) Anmeldenummer: 89111025.6

(22) Anmeldetag: 17.06.89

(51) Int. Cl.⁴: **B29C 67/18** , **B29C 67/22**

(30) Priorität: 30.06.88 DE 3822090

(43) Veröffentlichungstag der Anmeldung:
03.01.90 Patentblatt 90/01

(84) Benannte Vertragsstaaten:
AT BE CH DE FR GB IT LI NL SE

(71) Anmelder: BAYER AG

D-5090 Leverkusen 1 Bayerwerk(DE)

(72) Erfinder: Zöllner, Robert, Dr.
Feuerbachstrasse 11
D-5090 Leverkusen 1(DE)
Erfinder: Sommerfeld, Claus-Dieter, Dr.
Büscherhöfchen 11
D-5063 Overath(DE)
Erfinder: Dültgen, Gerd
Steinknippen 13
D-5060 Bergisch Gladbach 2(DE)

(54) Verfahren zum Verbinden von Rohrabschnitten an schaumstoffgedämmten Rohrleitungen.

(57) Um das Verbinden von Rohrabschnitten (1, 2) aus Mediumrohr (6, 7), Schaumstoff (9, 10) und Mantelrohr (11, 12) an Schaumstoff-gedämmten Rohrleitungen zu verbessern und hinsichtlich der Abdichtungseigenschaften die Verbindungsstelle (3) sicherer zu gestalten, versieht man die Verbindungsstelle (3) nach dem Verschweißen der Enden (4, 5) der Mediumrohre (6, 7) zunächst mit einer Schaumstoffdämmung (20), überbrückt dann die Verbindungsstelle (3) mit einer Formschalung (21) und füllt den verbleibenden Hohlraum (25) mit einem Kunststoffgießharz aus, welches zu einem Schutzmantel (27) aushärtet, und entfernt danach die Formschalung (21) wieder.

FIG.1

EP 0 348 761 A2

## Verfahren zum Verbinden von Rohrabschnitten an Schaumstoff-gedämmten Rohrleitungen

Die Erfindung betrifft ein Verfahren zum Verbinden von Rohrabschnitten aus Mediumrohr, Schaumstoff und Mantelrohr an Schaumstoff-gedämmten, insbesondere Polyurethanschaumstoff-gedämmten, Rohrleitungen wobei die ungedämmten Enden der Mediumrohre miteinander verschweißt werden und anschließend diese Enden mit einer Schaumstoffdämmung versehen und mit einem Schutzmantel abgedeckt werden.

Rohrleitungen, wie beispielsweise Fernwärmeleitungen, in welchen temperierte Medien transportiert werden, werden häufig unter der Erde verlegt. Während die Herstellung der einzelnen Rohrabschnitte keine Schwierigkeiten bereitet, ist die Verbindung dieser Rohrabschnitte auf der Baustelle immer noch problematisch.

Das Dämmen und Abdichten geschieht bisher durch Überschieben einer Muffe über die gesamte Verbindungsstelle und Ausschäumen des Hohlraumes zwischen Mediumrohr und Schiebemuffe. Dabei wird die Überlappungsstelle zwischen den Mantelrohrenden und der Muffe durch Schrumpfmanschetten oder Schweißen bzw. Kleben abgedichtet. Die Schiebemuffe besteht üblicherweise aus dem gleichen Werkstoff, vorzugsweise Polyethylen oder Polyvinylchlorid, wie die Mantelrohre. Früher hat man auch Muffen aus Bitumen-getränkten Materialien verwendet (US-PS 3 731 710).

Es ist auch bekannt, Muffen aus kunststoffbeschichtetem Stahl in geteilter Ausführung zu verwenden. Außerdem ist es bekannt, den Stoßstellenbereich nicht durch Ausschäumen, sondern durch vorgefertigte Schaumstoffschalen zu dämmen. Diese Verbindungsstellen haben aber alle den Nachteil, daß sie gegenüber den Rohrabschnitten eine wesentliche Querschnittsvergrößerung aufweisen, wodurch bei thermisch bedingter Bewegung der Rohrleitung im Erdreich an dieser Stelle ein erhöhter Reibungswiderstand auftritt und damit die Gefahr des Wegschiebens der Muffe besteht. Dadurch treten Undichtigkeiten auf und Erdfeuchtigkeit kann in die Dämmschicht eindringen.

Verbindungsstellen ohne Querschnittsvergrößerung sind zwar auch bekannt. Man verwendet hierzu vorgefertigte Halbschalen aus Schaumstoff und Schutzmantel oder verwendet einen geschlitzten Schutzmantel ohne Schaumstoffschalen und schäumt den Hohlraum zwischen Mediumrohr und Schutzmantel aus. Nachteilig ist dabei, daß die Schutzmäntel miteinander und mit den Enden der Mantel rohre der vorgefertigten Rohrabschnitte verschweißt oder verklebt werden müssen, was wegen der Baustellenbedingungen aber meist nicht sicher genug erfolgen kann.

Es besteht die Aufgabe, das Verbinden von Rohrabschnitten von Schaumstoff-gedämmten, insbesondere Polyurethanschaumstoff-gedämmten, Rohrleitungen dahingehend zu verbessern, daß selbst bei ungünstigen Baustellenbedingungen eine gut dichtende Verbindung erzielt wird, welche auch bei Verlegung der Rohrleitung unter der Erde und bei thermisch bedingter Bewegung der Rohrleitung im Erdreich störunanfällig ist.

Gelöst wird diese Aufgabe dadurch, daß zunächst die freien Enden der Mediumrohre verschweißt und mit Schaumstoff ummantelt werden und dann die Verbindungsstelle mit einer die Enden der Mantelrohre umgebenden Formschalung überbrückt wird, deren Innendurchmesser gleich dem Außendurchmesser der Mantelrohre bis maximal geringfügig größer ist, daß der verbleibende Hohlraum mit Kunststoffgießharz ausgefüllt wird und daß die Formschalung nach dem Aushärten des Kunststoffgießharzes vom Schutzmantel wieder entfernt wird.

Dadurch wird erreicht, daß sich unter schwierigen Baustellenbedingungen das Verbinden der Rohrenden in sicherer und schneller Weise mit geringem Aufwand durchführen läßt. Der Außendurchmesser der Verbindungsstelle soll möglichst demjenigen der Rohrabschnitte entsprechen, damit bei Dehnungsverschiebungen keine Angriffsflächen vorhanden sind. Aber auch ein geringfügig größerer Durchmesser, wie er auftritt, wenn die Gießharzummantelung die Enden der Mantelrohre außen überlappt, stellt kein Hindernis dar. Eine solche Verstärkung beträgt je nach Rohrdurchmesser maximal etwa 8 mm gegenüber dem Leitungsdurchmesser und stört insbesondere dann nicht, wenn ihre Enden abgeschrägt sind.

Die benötigte Formschalung besteht beispielsweise aus zwei Halbschalen, deren mit dem Gießharz in Berührung kommende Flächen antiadhesiv ausgerüstet sind. In der Formschalung und/oder in den Enden der Mantelrohre sind zweckmäßigerweise Entlüftungslöcher angeordnet, damit beim Ausgießen keine Luftblasen entstehen. Die Handarbeit ist auf ein Minimum reduziert. Das Kunststoffgießharz geht eine dichte, feuchtigkeitsundurchlässige Verbindung mit den Enden der Mantelrohre ein, welche vorzugsweise über die Schaumstoffummantelung der Rohrabschnitte überstehen. Die Schaumstoffummantelung an der Verbindungsstelle wird vorzugsweise zumindest im Bereich der überstehenden Enden der Mantelrohre im Außendurchmesser etwas geringer gehalten, damit das Kunststoffgießharz und die Enden der Mantelrohre, insbesondere von innen, eine ausreichend große Verbindungsfläche besitzen. In vorteilhafter Weise läßt sich als Gießharz ein solches auf Polyurethan-Basis verwenden.

Gemäß einer ersten Durchführungsform erfolgt die Schaumstoffummantelung der freien Enden der Mediumrohre durch Einlegen von Schaumstoffhalbschalen.

Diese Maßnahme ist besonders einfach, weil sich die Halbschalen passend vorfertigen lassen. Da die Enden der Mantelrohre meist über die Schaumstoffummantelung der Rohrabschnitte überstehen, verwendet man zweckmäßigerweise vier Halbschalen. Sie lassen sich bequem einlegen bzw. in die richtige Lage drücken.

Gemäß einer alternativen Durchführungsform erfolgt die Schaumstoffummantelung der Verbindungsstelle durch Ausschäumen eines durch eine wieder entfernbare Formschalung gebildeten Hohlraumes.

Dafür läßt sich eine besondere Formschalung verwenden oder man benutzt die Formschalung für das Einbringen des Kunststoffgießharzes und legt in diese Formschalung entsprechende Einlegeteile ein, um beim Ausschäumen den für das Gießharz bestimmten Hohlraum freizulassen.

Vorzugsweise wird die Formschalung temperiert.

Dadurch wird erreicht, daß die Aushärtung des Gießharzes schneller erfolgt.

Um eine gute Verbindung zwischen den Enden der Mantelrohre und dem Gießharz zu erzielen, erfahren die Enden der Mantelrohre vorzugweise eine die Haftung zum Gießharz verbessernde Vorbehandlung.

Diese läßt sich auf verschiedene Weise bewerkstelligen, indem man die Enden der Mantelrohre beflammt, mit Haft vermittlern behandelt, anfast oder anderweitig oberflächenvergrößernd verformt.

Soweit möglich, sollte die Vorbehandlung bereits vor der Verlegung der Rohrabschnitte erfolgen, weil dies wegen der Zugänglichkeit leichter ist. Besonders vorteilhaft ist es, bei ausreichender Wandstärke der Mantelrohre deren Enden außen mit einem Absatz zu versehen. Denn in diesem Falle ist es möglich, diesen Absatz mit Gießharz zu überlappen, ohne daß eine Durchmesservergrößerung eintritt. Die Dicke der Unterlappung der Enden der Mantelrohre braucht auch nur wenige Millimeter zu betragen, so daß die Schaumstoffdämmung an dieser Stelle nahezu die gleiche Stärke aufweisen kann wie in den Rohrabschnitten.

Vorzugsweise werden zum Verbinden der Rohrabschnitte Kunststoffgießharze auf Basis Polyurethan verwendet.

Es versteht sich, daß die Verbindungsstelle, gegebenenfalls ebenso wie die Rohrabschnitte, zusätzlich mit einem Feuchtigkeitsschutz aus einem gestrichenen, gespritzten oder gewickelten Coating aus hydrophobem material versehen werden kann.

In der Zeichnung ist das neue Verfahren an hand eines Ausführungsbeispiels einer Verbindungsstelle einer Rohrleitung dargestellt und nachstehend näher erläutert. Es zeigen jeweils im Schnitt:

Fig. 1 die Verbindungsstelle mit Formschalung bei der Einfüllung des Kunststoffgießharzes und

Fig. 2 die fertige Verbindungsstelle.

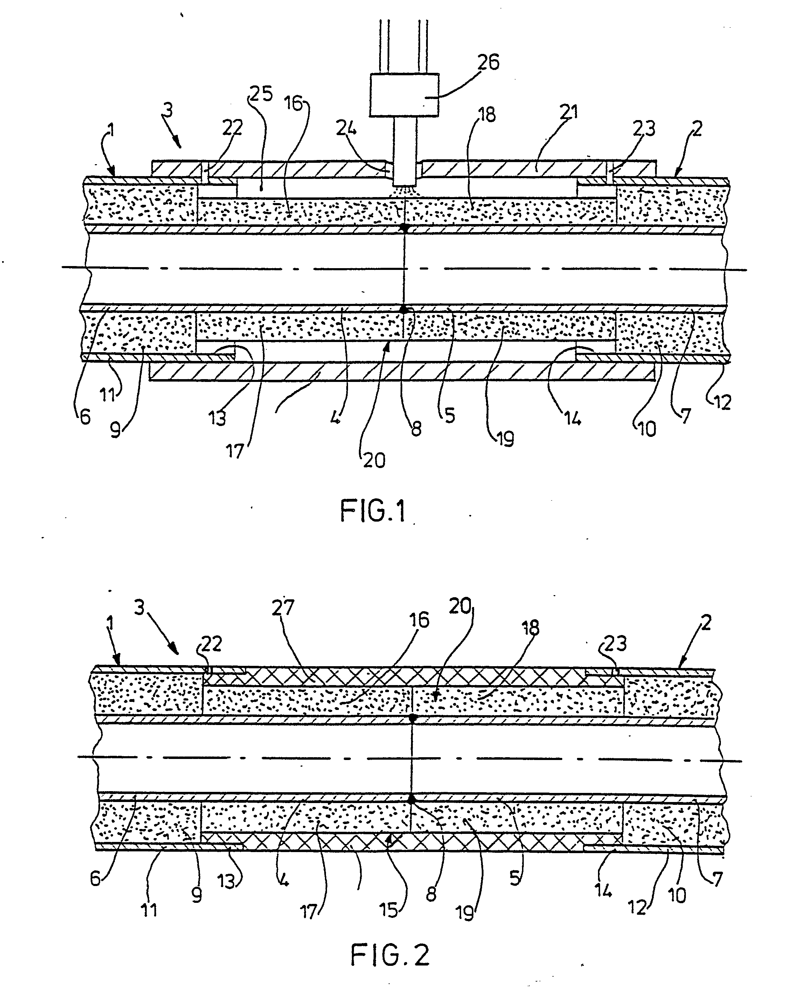

Die Rohrabschnitte 1, 2 einer Rohrleitung bilden eine Verbindungsstelle 3, wobei die Enden 4, 4 der Mediumrohre 6, 7 gegeneinander stoßen und durch eine Schweißnaht 8 verbunden sind bzw. werden. Die Mediumrohre 6, 7 sind mit Schaumstoffdämmungen 9, 10 versehen, welche die Enden 4, 5 freilassen. Die Schaumstoffdämmungen 9, 10 sind durch Mantelrohre 11, 12 abgedeckt, deren Enden 13, 14 vorspringen. Diese Enden 13, 14 sind durch Beflammen zum Erzielen einer besseren Haftung vorbehandelt. In den Zwischenraum 15 zwischen den Schaumstoffdämmungen 9, 10 sind Schaumstoffhalbschalen 16, 17, 18, 19 wie eine Ummantelung 20 paßgerecht eingelegt. Die Wanddicke dieser Dämmung 20 ist geringer als jene der Schaumstoffdämmungen 9, 10, um eine größere Verankerungsfläche des Gießharzes an den beiden Mantelrohren 11, 12 zu erzielen. Die Wanddickenverminderung der Dämmung 20 beträgt etwa die Hälfte der Wanddicke der Mantelrohre 11, 12. Eine zweiteilige Formschalung 21 überbrückt die Verbindungsstelle 3, indem sie sich auf die Enden 13, 14 der Mantelrohre 11, 12 abdichtend abstützt. Entlüftungslöcher 22, 23 durchqueren sowohl die Enden 13, 14 der Mantelrohre 11, 12 als auch die Formschalung 21. Durch ein Fülloch 24 wird mittels eines Mischkopfes 26 ein Zweikomponentenreaktionsgießharz in den verbleibenden Hohlraum 25 eingebracht (Fig. 1), welches nach dem Aushärten den Schutzmantel 27 (Fig. 2) gleichen Außendurchmessers wie die restliche Rohrleitung bildet.

## Ansprüche

1. Verfahren zum Verbinden von Rohrabschnitten (1, 2) aus Mediumrohr (6, 7), Schaumstoff (9, 10) und Mantelrohr (11, 12) and Schaumstoff-gedämmten, insbesondere Polyurethanschaumstoffgedämmten, Rohrleitungen, wobei die ungedämmten Enden (4, 5) der Mediumrohre (6, 7) miteinander verschweißt werden und anschließend diese Enden (4, 5) mit einer Schaumstoffdämmung (20) versehen und mit einem Schutzmantel (27) abgedeckt werden, dadurch gekennzeichnet, daß zunächst die freien Enden (4, 5) der Mediumrohre (6, 7) mit Schaumstoff (20) ummantelt werden und dann die Verbindungsstelle (3) mit einer die Enden (13, 14) der Mantelrohre (11, 12) umgebenden Formschalung (21) überbrückt wird, deren Innendurchmesser gleich dem Außendurchmesser der Mantelrohre (11, 12) bis maximal geringfügig größer ist, daß der verbleibende Hohlraum (25) mit Kunststoffgießharz ausgefüllt wird und daß die Formschalung (21) nach dem Aushärten des Kunststoffgießharzes vom Schutzmantel (27) wieder entfernt wird.

2. Verfahren nach Anspruch 1, dadurch gekennzeichnet, daß die Schaumstoffdämmung (20) durch Einlegen von Schaumstoffhalbschalen (16, 17, 18, 19) erfolgt.

3. Verfahren nach Anspruch 1, dadurch gekennzeichnet, daß die Schaumstoffdämmung durch Ausschäumen eines durch eine wieder entfernbare Formschalung gebildeten Hohlraumes erfolgt.

4. Verfahren nach einem der Ansprüche 1 bis 3, dadurch gekennzeichnet, daß die Formschalung (21) temperiert wird.

5. Verfahren nach einem der Ansprüche 1 bis 4, dadurch gekennzeichnet, daß die Oberflächen der Enden (13, 14) der Mantelrohre (11, 12) eine die Haftung zum Kunstgießharz verbessernde Vorbehandlung erfahren.

6. Verfahren nach Anspruch 5, dadurch gekennzeichnet, daß die Oberfläche der Enden (13, 14) der Mantelrohre (11, 12) beflammt werden.

7. Verfahren nach Anspruch 5, dadurch gekennzeichnet, daß die Oberfläche der Enden (13, 14) der Mantelrohre (11, 12) mit Haftvermittlern behandelt werden.

8. Verfahren nach Anspruch 5, dadurch gekennzeichnet, daß die Enden (13, 14) der Mantelrohre (11, 12) angefast werden.

9. Verfahren nach Anspruch 5, dadurch gekennzeichnet, daß die Enden (13, 14) der Mantelrohre (11, 12) oberflächenvergrößernd verformt werden.

10. Verfahren nach einem der Ansprüche 1 bis 9, dadurch gekennzeichnet, daß zum Verbinden der Rohrabschnitte Kunststoffgießharze auf Basis Polyurethan verwendet werden.

FIG.1

FIG.2